# EUROPÄISCHE PATENTANMELDUNG

(11) **EP 4 542 007 A1**
(43) Veröffentlichungstag der Anmeldung: **23.04.2025**
(21) Anmeldenummer: 24207033.2
(22) Anmeldetag: 16.10.2024
(51) Int. Cl.: F01D 25/06, F01D 25/24

(54) **LEITSCHAUFEL FÜR EINE GASTURBINE, LEITSCHAUFELCLUSTER FÜR EINE GASTURBINE, GEHÄUSE FÜR EINE GASTURBINE, UND GASTURBINE**

(30) Priorität: 17.10.2023 DE 102023128456
(71) Anmelder: MTU Aero Engines AG, 80995 München (DE)
(72) Erfinder: Schlemmer, Markus, 80995 München (DE); Hartung, Andreas, 80995 München (DE); Koscso, Adam, 80995 München (DE); Humhauser, Werner, 80995 München (DE); Von Brauneck, Dennis, 80995 München (DE)

(57) **Zusammenfassung**

Die Erfindung betrifft eine Leitschaufel für eine Gasturbine, umfassend ein Schaufelblatt (14), eine an einem radialen Ende des Schaufelblatts (14) angeordnete Plattform (16), einen sich radial von der Plattform (16) erstreckenden stromaufwärtigen Flansch (20) und einen sich radial von der Plattform (16) erstreckenden stromabwärtigen Flansch (22), wobei die Flansche (20, 22) zusammen mit einem zwischen den Flanschen (20, 22) liegenden Abschnitt (24) der Plattform (16) eine sich in Umfangsrichtung (U) der Gasturbine erstreckende Nut (26) zur Anordnung eines Dämpfungselements (28) begrenzen. Eine die Nut (26) begrenzende Oberfläche des Abschnitts (24) der Plattform (16) ist zumindest bereichsweise radial in Richtung einer Öffnung der Nut (26) gewölbt. Die Erfindung betrifft weiterhin ein Leitschaufelcluster (10), ein Gehäuse (12) für eine Gasturbine sowie eine Gasturbine.

## Beschreibung

Die Erfindung betrifft eine Leitschaufel, ein Leitschaufelcluster sowie ein Gehäuse für eine Gasturbine, insbesondere für ein Flugtriebwerk. Die Erfindung betrifft weiterhin eine Gasturbine mit entsprechend ausgebildeten Leitschaufeln bzw. Leitschaufelclustern und/oder einem entsprechend ausgebildeten Gehäuse.

Leitschaufeln bzw. Leitschaufelcluster für Gasturbinen sind bereits aus dem Stand der Technik bekannt und dienen als Statorbaugruppen im Strömungskanal eines Gehäuses der Gasturbine dazu, die Strömung des Arbeitsmediums in der Gasturbine zu steuern und eine gewünschte Anströmung stromabliegender Laufschaufeln eines Rotors sicherzustellen. Dies ermöglicht eine effiziente Energieumwandlung und Leistungsgewinnung. Leitschaufelcluster umfassen zwei oder mehr Leitschaufeln, die über wenigstens eine gemeinsame Plattform zur radialen Begrenzung des Strömungskanals miteinander verbunden sind. Jede Schaufel weist dabei ein Schaufelblatt mit einer Saugseite und einer Druckseite auf, die in einer stromaufwärtigen, im Betrieb vom Arbeitsfluid der Strömungsmaschine angeströmten Vorderkante und einer axial gegenüberliegenden, stromabwärts anzuordnenden Hinterkante miteinander verbunden sind. Mehrere Leitschaufeln bzw. Leitschaufelcluster werden in Form eines Leitschaufelrings oder Leitschaufelkranzes in einem Verdichter und/oder einer Turbine der Strömungsmaschine feststehend gegenüber einem Gehäuse der Strömungsmaschine angeordnet.

Aus der DE 39 17 937 A1 ist es bekannt, die Plattform von Leitschaufeln bzw. Leitschaufelclustern mit einem sich radial von der Plattform erstreckenden stromaufwärtigen Flansch und einem sich radial von der Plattform erstreckenden stromabwärtigen Flansch zu versehen, wobei die Flansche zusammen mit einem zwischen den Flanschen liegenden Abschnitt der Plattform eine sich in Umfangsrichtung der Gasturbine erstreckende Nut zur Anordnung eines Dämpfungselements begrenzen. Über die Flansche kann eine Anbindung der Plattform an das Gehäuse bzw. eine Dichtung erfolgen. Das in der Nut angeordnete Dämpfungselement sorgt aufgrund seines Reibkontakts für eine Schwindungsdämpfung der Leitschaufeln. Die Schwingungen entstehen im Wesentlichen durch die Wirbelschleppen und Druckschwankungen des an den Leitschaufeln entlang strömenden Arbeitsmediums, welche zu Biege- und Torsionsbeanspruchungen der Leitschaufeln führen. Eine Dämpfung der Leitschaufeln ist daher wichtig, um die Schwingungsamplituden zu reduzieren, da es ansonsten zu Schwingermüdungen und erhöhte Bruchwahrscheinlichkeit kommen kann.

Wie sich herausgestellt hat, sind bestehende Schwingungsdämpfungslösungen aber nicht immer ausreichend. Insbesondere im Dauerfestigkeitsbereich (engl. high cycle fatigue, HCF) kann es durch die dynamische Beanspruchung nach mehreren Lastwechseln zu Schwinganrissen kommen, die makroskopisch zunächst ohne eine unmittelbar erkennbare plastische Verformung erfolgen können. Dies betrifft nicht nur aber insbesondere sogenannte "cantilevered" Leitschaufeln bzw. Leitschaufelcluster mit freiliegenden Schaufelspitzen.

Aufgabe der vorliegenden Erfindung ist es, eine Leitschaufel für eine Gasturbine zu schaffen, welche eine verbesserte Schwingungsdämpfung ermöglicht. Weitere Aufgaben der Erfindung bestehen darin, ein entsprechendes Leitschaufelcluster mit der Möglichkeit einer verbesserten Schwingungsdämpfung, ein Gehäuse für eine Gasturbine mit entsprechend verbesserten Leitschaufeln bzw. Leitschaufelclustern sowie eine entsprechend verbesserte Gasturbine zu schaffen.

Die Aufgaben werden erfindungsgemäß durch eine Leitschaufel gemäß Anspruch 1, durch ein Leitschaufelcluster gemäß Anspruch 5, durch ein Gehäuse gemäß Anspruch 6 sowie durch eine Gasturbine gemäß Anspruch 10 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte und umgekehrt anzusehen sind.

Ein erster Erfindungsaspekt betrifft eine Leitschaufel für eine Gasturbine, umfassend ein Schaufelblatt, eine an einem radialen Ende des Schaufelblatts angeordnete Plattform, einen sich radial von der Plattform erstreckenden stromaufwärtigen Flansch und einen sich radial von der Plattform erstreckenden stromabwärtigen Flansch, wobei die Flansche zusammen mit einem zwischen den Flanschen liegenden Abschnitt der Plattform eine sich in Umfangsrichtung der Gasturbine erstreckende Nut zur Anordnung eines Dämpfungselements begrenzen. Eine verbesserte Schwingungsdämpfung ist erfindungsgemäß dadurch ermöglicht, dass eine die Nut begrenzende Oberfläche des Abschnitts der Plattform zumindest bereichsweise radial in Richtung einer Öffnung der Nut gewölbt ist. Mit anderen Worten ist die den "Boden" bzw. einen Wandbereich der Nut bildende Oberfläche der Plattform nicht wie bisher plan bzw. in Umfangsrichtung kreiszylindersegmentförmig ausgebildet, sondern weist im Querschnitt in axialer Richtung eine konvexe Wölbung auf, die auch als relative Aufdickung oder Rippe bezeichnet werden kann. Eine solche "unebene" Form des "Bodens" der Nut ermöglicht einen verbesserten Reibkontakt und damit eine verbesserte Kraftübertragung für ein in der Nut angeordnetes Dämpfungselement, das dementsprechend einen gleichmäßigeren und betriebssichereren Kontakt zur Leitschaufel ausbilden und damit eine verbesserte Schwingungsdämpfung realisieren kann. Die Geometrie des Dämpfungselements kann dabei nahezu beliebig sein, solange es einen Kontakt zumindest mit der gewölbten Oberfläche der Nut ausbilden kann. Die Richtungsangaben "radial" bzw. "Radial-", "axial-" bzw. "Axial-" und "Umfangs-" beziehen sich im Rahmen der vorliegenden Erfindung immer auf die Maschinenachse einer Gasturbine, wenn die erfindungsgemäße Leitschaufel bzw. das erfindungsgemäße Leitschaufelcluster in dieser bestimmungsgemäß montiert ist, sofern sich aus dem Kontext nicht explizit oder implizit etwas anderes ergibt. Neben der Schwingungsdämpfung infolge Energiedissipation bei Reibung besitzt das Dämpfungselement, das grundsätzlich auch als Reibkontakt bezeichnet werden kann, eine weitere Fähigkeit, um Schwingungsbeanspruchung zu reduzieren. Diese Reduktion erfolgt durch Absorption oder Umverteilung der Energie aus einer zu dämpfenden Schwingungsform in eine andere, höhere und/oder niedrigere Schwingungsform. Das Dämpfungselement kann also generell entweder für Energiedissipation oder für Absorption (Energietransfer/-umwandlung) ausgelegt oder für eine Kombination aus beiden Dämpfungsformen ausgelegt sein und verwendet werden.

In einer vorteilhaften Ausgestaltung der Erfindung ist vorgesehen, dass eine von der Nut abgewandte Oberfläche des Abschnitts der Plattform zumindest bereichsweise radial in Richtung der Öffnung der Nut gewölbt ist und/oder dass der Abschnitt der Plattform im Querschnitt eine zumindest im Wesentlichen einheitliche Wandstärke besitzt. Mit anderen Worten ist es erfindungsgemäß vorgesehen, dass auch die dem Arbeitsmedium der Gasturbine zugewandte Oberfläche der Plattform in axialer Richtung von einer stromaufwärtigen Seite zu einer stromabwärtigen Seite betrachtet uneben und vorzugsweise konkav, das heißt ebenfalls in radialer Richtung zur Öffnung der Nut hin verformt ausgebildet ist. Neben aerodynamischen Vorteilen durch eine solche gewölbte Oberfläche der Plattform im Bereich des vorbeiströmenden Arbeitsfluids kann dabei trotzdem eine zumindest im Wesentlichen einheitliche Wandstärke der Plattform beibehalten werden, so dass durch die beschriebene relative Verformung bzw. Konturierung der Plattform keine zusätzlichen Schwingungs- oder Festigkeitsprobleme entstehen.

Weitere Vorteile ergeben sich dadurch, dass das Schaufelblatt gegenüber der Plattform eine freiliegende Schaufelspitze aufweist. Mit anderen Worten ist die Leitschaufel in der sogenannten "cantilevered"-Bauweise ausgeführt, also mit einem freien Schaufelende an der Nabe und einem entsprechenden Radialspalt. Statoren mit Deckband liefern aufgrund der Verbindung benachbarter Schaufelblätter in der Regel ein mechanisch stabileres System mit vergleichsweise geringerer Schwingungsneigung der Leitschaufeln auf Kosten einer deutlich komplizierteren Geometrie und damit verbundenen höheren Fertigungskosten. Im Gegensatz dazu sind "cantilevered" Leitschaufeln ohne zusätzliche Plattform oder Deckband vergleichsweise schwingungsanfälliger, jedoch deutlich preiswerter in der Fertigung. Aufgrund der erfindungsgemäß verbesserten Dämpfungseigenschaften können diese potenziellen Nachteile der "cantilevered"-Bauweise überwunden werden.

In einer weiteren vorteilhaften Ausgestaltung der Erfindung ist vorgesehen, dass der stromaufwärtige Flansch eine stromabwärtige Auskragung in die Nut aufweist und/oder dass der stromabwärtige Flansch eine stromaufwärtige Auskragung in die Nut umfasst. Hierdurch kann eine einseitige oder zweiseitige hakenartige Sperre realisiert werden, die ein Herausfallen eines in der Nut angeordneten Dämpfungselements besonders zuverlässig verhindert und darüber hinaus zusätzliche Kontaktstellen für das Dämpfungselement bilden kann. Alternativ oder zusätzlich ist es vorgesehen, dass der stromaufwärtige Flansch eine stromaufwärtige Auskragung aufweist, welche zusammen mit der Plattform eine weitere, sich in Umfangsrichtung der Gasturbine erstreckende Nut bildet und/oder dass der stromabwärtige Flansch eine stromabwärtige Auskragung aufweist, welche zusammen mit der Plattform eine weitere sich in Umfangsrichtung der Gasturbine erstreckende Nut bildet. Auf diese Weise kann ein die Plattform über in die Nut bzw. Nuten eingreifende Haltehaken besonders einfach und zuverlässig am Gehäuse, einem Dichtungselement oder dergleichen befestigt werden. Ein weiterer Vorteil der genannten Auskragungen, einzeln und in beliebiger Kombination, besteht darin, dass sie zusätzlich zu einem in der Nut der Plattform angeordneten Dämpfungselements ein inhärentes, weiteres Dämpfungselement für zusätzliche Schwingungsdämpfung bilden.

Ein zweiter Aspekt der Erfindung betrifft ein Leitschaufelcluster für eine Gasturbine, bei welchem mindestens zwei Leitschaufeln gemäß dem ersten Erfindungsaspekt über wenigstens eine gemeinsame Plattform zur radialen Begrenzung eines Strömungskanals der Gasturbine miteinander verbunden sind. Hierdurch können die im Zusammenhang mit dem ersten Erfindungsaspekt beschriebenen Vorteile und insbesondere der verbesserten Reibkontakt und die damit eine verbesserte Schwingungsdämpfung für ein in der Nut der Plattform des Leitschaufelclusters angeordnetes Dämpfungselement auch bei einem Leitschaufelcluster mit zwei, drei, vier oder mehr Schaufelblättern realisiert werden.

Ein dritter Aspekt der Erfindung betrifft ein Gehäuse für eine Gasturbine, mit einem Strömungskanal, in welchem mehrere Leitschaufeln gemäß dem ersten Erfindungsaspekt und/oder mehrere Leitschaufelcluster gemäß dem zweiten Erfindungsaspekt kranzförmig angeordnet sind, wobei die sich in Umfangsrichtung der Gasturbine erstreckenden Nuten der Leitschaufeln und/oder Leitschaufelcluster miteinander fluchten und wobei wenigstens ein Dämpfungselement in wenigstens einer der Nuten angeordnet ist. Hierdurch kann aus den vorstehend beschriebenen Gründen eine verbesserte Schwingungsdämpfung realisiert werden. Das Dämpfungselement kann generell einteilig oder mehrteilig ausgebildet sein und erstreckt sich vorzugsweise entlang des gesamten Umfangs des aus den Leitschaufeln bzw. Leitschaufelclustern gebildeten Leitschaufelkranzes für eine optimale Schwingungsdämpfung.

In einer vorteilhaften Ausgestaltung der Erfindung ist vorgesehen, dass das wenigstens ein Dämpfungselement eine Aussparung im Bereich des radial in Richtung einer Öffnung der Nut gewölbt Abschnitts der zugeordneten Plattform aufweist. Hierdurch kann neben einer Gewichtsreduktion insbesondere ein gezieltes "Verstimmen" des Dämpfungselements erzielt werden, wodurch eine einfache Anpassbarkeit an die Eigenfrequenzen und die Schwingungsantwort der jeweiligen Leitschaufeln erzielbar ist. Alternativ oder zusätzlich ist vorgesehen, dass das Dämpfungselement im Querschnitt u-förmig oder o-förmig oder klammerförmig ausgebildet ist. Alternativ oder zusätzlich ist vorgesehen, dass das Dämpfungselement in Umfangsrichtung linear ausgebildet ist. Dies ist insbesondere für vergleichsweise kurze Dämpfungselemente, bei denen eine Krümmung der Leitschaufel bzw. des Leitschaufelclusters vernachlässigt werden kann, sinnvoll, da das Dämpfungselement hierdurch besonders kostengünstig hergestellt werden kann ohne komplexe Krümmungen realisieren zu müssen.

Eine besonders zuverlässige Schwingungsdämpfung ergibt sich in weiterer Ausgestaltung dadurch, dass das Dämpfungselement im Querschnitt mindestens drei Anlagepunkte in der Nut aufweist und/oder dass das Dämpfungselement wenigstens einen und vorzugsweise mindestens zwei Anlagepunkte mit dem Gehäuse aufweist. Anstelle eines Anlagepunkts kann generell auch eine flächige Anlage vorgesehen sein.

In einer weiteren vorteilhaften Ausgestaltung der Erfindung ist vorgesehen, dass das Dämpfungselement überbrückend zwischen mindestens zwei aneinander angrenzenden Leitschaufeln und/oder Leitschaufelclustern angeordnet ist. Auf diese Weise kann das Dämpfungselement vorteilhaft auch als Dichtelement wirken, wodurch zusätzliche Standarddichtbleche und dergleichen zwischen den benachbarten Leitschaufeln bzw. Leitschaufelclustern entfallen können.

Ein vierter Aspekt der Erfindung betrifft eine Gasturbine, insbesondere Flugtriebwerk, mit wenigstens einer Leitschaufel gemäß dem ersten Erfindungsaspekt und/oder wenigstens einem Leitschaufelcluster gemäß dem zweiten Erfindungsaspekt und/oder wenigstens einem Gehäuse gemäß dem dritten Erfindungsaspekt. Die sich hieraus ergebenden Merkmale und deren Vorteile sind den vorhergehenden Beschreibungen der ersten drei Erfindungsaspekte zu entnehmen.

Weitere Merkmale der Erfindung ergeben sich aus den Ansprüchen und den Ausführungsbeispielen. Die in der vorangegangenen Beschreibung erwähnten Merkmale und Kombinationen von Merkmalen sowie die in den folgenden Beispielen genannten Merkmalskombinationen können nicht nur in den jeweils angegebenen Kombinationen verwendet werden, sondern auch in anderen Kombinationen oder in Alleinstellung, ohne den Rahmen der Erfindung zu verlassen. Es sind daher auch Ausführungen der Erfindung als mitumfasst und offenbart anzusehen, die in den Beispielen nicht ausdrücklich gezeigt und erläutert werden. Es sind auch Ausführungen und Kombinationen von Merkmalen als offenbart anzusehen, die nicht alle Merkmale eines ursprünglich formulierten unabhängigen Anspruchs aufweisen. Dabei zeigt:
- Fig. 1: eine Perspektivansicht von zwei erfindungsgemäßen Leitschaufelclustern;
- Fig. 2: eine schematische Schnittansicht durch eine Plattform eines an einem Gehäuse einer Gasturbine angeordneten Leitschaufelclusters;
- Fig. 3: eine schematische und ausschnittsweise Perspektivansicht des am Gehäuse angeordneten Leitschaufelclusters, wobei ein alternatives Dämpfungselement in einer Nut angeordnet ist; und
- Fig. 4: eine schematische und ausschnittsweise Perspektivansicht auf eine Plattform eines Leitschaufelclusters, wobei ein weiteres alternatives Dämpfungselement in der Nut angeordnet ist.

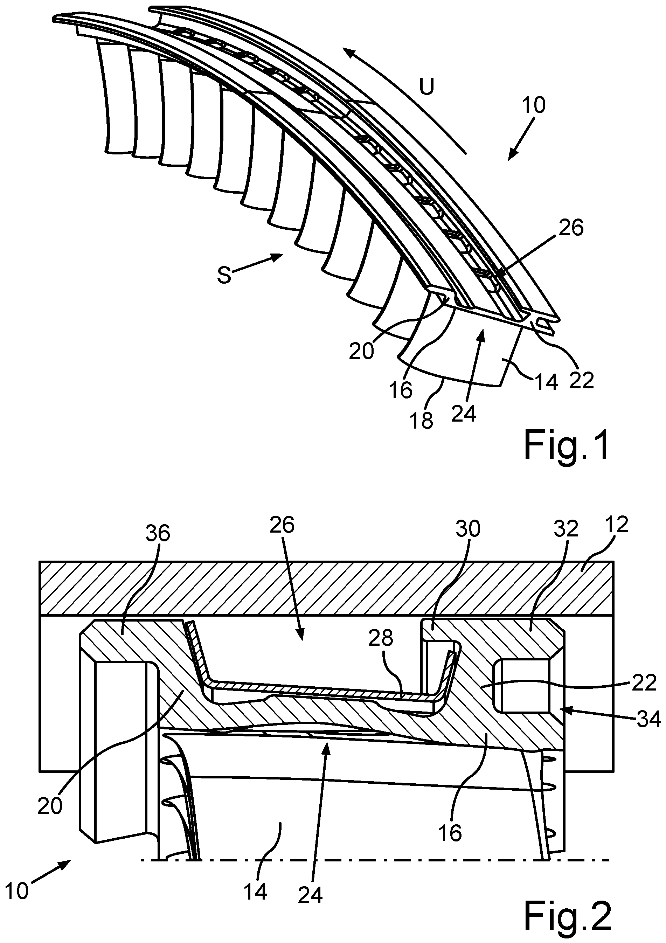

**Fig. 1** zeigt eine Perspektivansicht von zwei erfindungsgemäßen Leitschaufelclustern 10, die in an sich bekannter Weise mit weiteren Leitschaufelclustern 10 kranzförmig als Statorgruppe in einem Gehäuse 12 (s. Fig. 2) einer Gasturbine (nicht gezeigt), insbesondere eines Flugtriebwerks, angeordnet werden. Jedes Leitschaufelcluster 10 weist mehrere Schaufelblätter 14 auf, die über eine gemeinsame, radial äußere Plattform 16 miteinander verbunden sind. Die Plattform 16 bildet ein Deckband zur Begrenzung eines Strömungskanals S der zugeordneten Gasturbine. Im gezeigten Ausführungsbeispiel sind die Leitschaufelcluster 10 in der sogenannten "cantilevered"-Bauweise ausgeführt, so dass die Schaufelspitzen 18 der Schaufelblätter 14 freiliegen. Fig. 1 wird im Folgenden in Zusammenschau mit **Fig. 2** erläutert, welche eine schematische Schnittansicht durch die Plattform 16 eines am Gehäuse 12 der Gasturbine angeordneten Leitschaufelclusters 10 zeigt. Man erkennt, dass die Plattform 16 einen sich radial von der Plattform 16 erstreckenden stromaufwärtigen Flansch 20 und einen sich radial von der Plattform 16 erstreckenden stromabwärtigen Flansch 22 aufweist. Die Flansche 20, 22 bilden zusammen mit einem zwischen den Flanschen 20, 22 liegenden Abschnitt 24 der Plattform 16 eine sich in Umfangsrichtung U der Gasturbine bzw. des Gehäuses erstreckende Nut 26. Wie in Fig. 2 gezeigt, wird in der Nut 26 ein klammerförmiges Dämpfungselement 28 zur Schwingungsdämpfung angeordnet. Wie man insbesondere in Fig. 2 erkennt, ist eine die Nut 26 begrenzende Oberfläche des Abschnitts 24 der Plattform 16 zumindest bereichsweise radial in Richtung einer radial oberen Öffnung der Nut 26 gewölbt. Mit anderen Worten ist die den "Boden" bzw. einen Wandbereich der Nut 26 bildende Oberfläche der Plattform 16 nicht plan bzw. in Umfangsrichtung kreiszylindersegmentförmig ausgebildet, sondern weist im Querschnitt in axialer Richtung eine konvexe Wölbung auf, die auch als relative Aufdickung, Rippe oder Kontaktrippe bezeichnet werden kann. Eine solche "unebene" Form des "Bodens" der Nut 26 ermöglicht einen verbesserten Reibkontakt und damit eine verbesserte Kraftübertragung für das in der Nut 26 angeordnetes Dämpfungselement 28, das dementsprechend einen gleichmäßigeren und betriebssichereren Kontakt zu einer Leitschaufel bzw. dem Leitschaufelcluster 10 ausbilden und damit eine verbesserte Schwingungsdämpfung realisieren kann. In Fig. 1 erkennt man die rippenförmige "Aufdickung" oder Verformung der Plattform 16, die bei einem voll montierten Leitschaufelkranz umfangsseitig umlaufend ausgebildet ist. Wie man in Fig. 2 erkennt, kann in manchen Ausgestaltungen auch eine von der Nut 26 abgewandte Oberfläche des Abschnitts 24 der Plattform 16 zumindest bereichsweise radial in Richtung der Öffnung der Nut 26 gewölbt sein, wodurch der Abschnitt 24 der Plattform 16 im Querschnitt eine zumindest im Wesentlichen einheitliche oder konstante Wandstärke besitzt. Darüber hinaus besitzt die Plattform 16 damit eine aerodynamisch günstige Wandkontur für das im Betrieb der Gasturbine vorbeiströmende Arbeitsmedium. Vorzugsweise ist die Leitschaufel bzw. das Leitschaufelcluster 10 additiv gefertigt, damit die genannten geometrischen Features einfach und zuverlässig realisiert werden können. Das vorliegend u-förmige Dämpfungselement 28 besitzt mindestens drei Anlagepunkte bzw. -flächen und liegt stromauf am Flansch 20 an, im seinem Mittelbereich auf dem rippenförmigen Abschnitt 24 und stromab am Flansch 22. Wie man in Fig. 2 weiterhin erkennt, besitzt der stromabwärtige Flansch 22 eine stromabwärtig geneigte Wand, an welcher ein stromabwärtiger Schenkel des Dämpfungselements 28 anliegt, sowie an seinem radial äußeren Endbereich eine stromaufwärtige Auskragung 30, die in die Nut 26 ragt bzw. die Öffnung der Nut 26 begrenzt, wodurch eine Art Tasche oder Herausfallsicherung sowie gegebenenfalls ein zusätzlicher Anlagepunkt für das Dämpfungselement 28 realisiert ist. Weiterhin besitzt der stromabwärtige Flansch 22 eine stromabwärtige Auskragung 32, die zusammen mit der Plattform 16 eine weitere Nut 34 bildet, die ebenfalls umfangsseitig umläuft und zur Aufnahme von Befestigungshaken oder dergleichen zum Festlegen des Leitschaufelclusters 10 am Gehäuse 12, einem Dichtelement oder anderen statischen Bauelementen geeignet ist. Der Flansch 22 weist damit im Querschnitt eine näherungsweise T-förmige Gestalt auf. Unabhängig vom Flansch 22 kann grundsätzlich auch der Flansch 20 eine T-förmige Gestalt aufweisen.

Der stromaufwärtige Flansch 20 weist seinerseits eine stromaufwärtig geneigte Wand auf, an welcher ein stromaufwärtiger Schenkel des Dämpfungselements 28 anliegt. Weiterhin umfasst der Flansch 20 eine stromaufwärtige Auskragung 36, die ebenfalls zur Befestigung des Leitschaufelclusters 10 dient. Die Auskragungen 30, 32, 36 fungieren zudem ihrerseits als zusätzliche Dämpfungselemente.

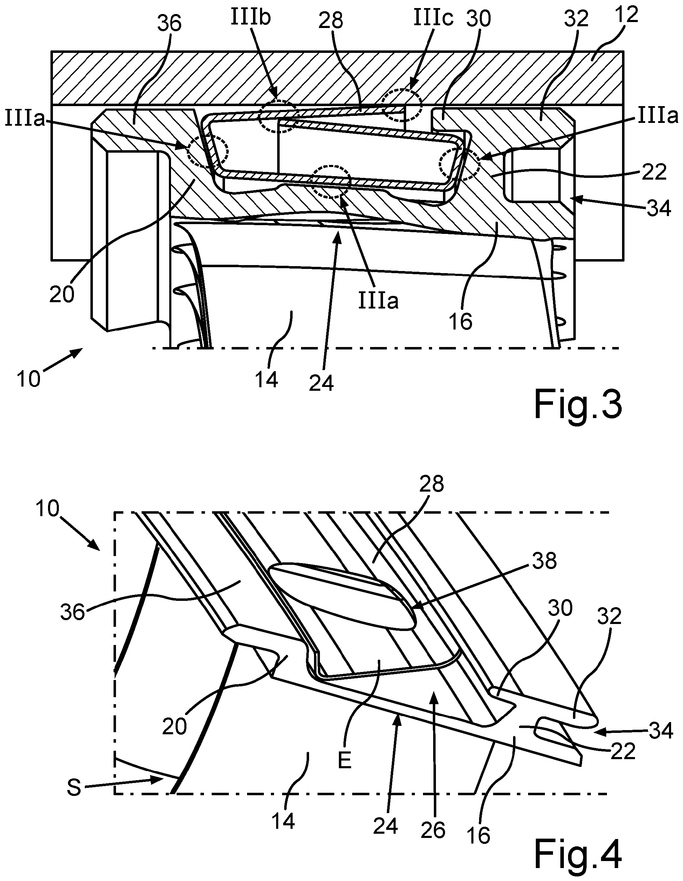

**Fig. 3** zeigt eine schematische und ausschnittsweise Perspektivansicht des am Gehäuse 12 angeordneten Leitschaufelclusters 10, wobei ein alternatives Dämpfungselement 28 in der Nut 26 angeordnet ist. Der generelle Aufbau des Leitschaufelclusters 10 entspricht dem vorhergehenden Ausführungsbeispiel. Im Unterschied zum u-förmigen Dämpfungselement 28 aus Fig. 2 ist das Dämpfungselement 28 vorliegend klammerförmig bzw. bereichsweise über sich selbst gebogen.

Hierdurch weist das Dämpfungselement 28 zusätzlich zu den vorgenannten drei Anlagepunkten oder -flächen IIIa in der Nut eine Kontaktstelle IIIb mit sich selbst sowie optional eine Kontaktstelle IIIc mit dem Gehäuse 12 auf. Die Schwingungsdämpfung kann daher nicht nur durch Reibung mit dem Leitschaufelcluster 10, sondern auch durch Reibung in sich selbst sowie gegebenenfalls durch Reibung mit dem Gehäuse 12 realisiert werden.

**Fig. 4** zeigt eine schematische und ausschnittsweise Perspektivansicht auf eine Plattform 16 eines Leitschaufelclusters 10, wobei ein weiteres alternatives Dämpfungselement 28 in der Nut 26 angeordnet ist. Im Unterschied zu den vorhergehenden Ausführungsbeispielen ist die Plattform 16 im Abschnitt 24 auf ihrer dem Strömungskanal S zugewandten Seite nicht verformt, sondern besitzt eine ebene Kontur. Weiterhin weist das Dämpfungselement 28 zur Anpassung seiner Dämpfungseigenschaften eine Aussparung 38 im Kontaktbereich mit dem Abschnitt 24 der Plattform 16 auf. Weiterhin erkennt man, dass ein Endbereich E des Dämpfungselements 28 schräg bezüglich des Rands der Plattform 16 verläuft und nicht bündig mit der Plattform 16 abschließt. Hierdurch können die Dämpfungselemente 28 benachbarter Leitschaufelcluster 10 überlappend bzw. segmentübergreifend angeordnet werden, wodurch vorteilhaft auf zusätzliche Dichtbleche oder dergleichen verzichtet werden kann. Bei kurzen Leitschaufelclustern 10 bzw. Einzelschaufeln kann das Dämpfungselement 28 als gerades Element ausgeführt werden, was seine Fertigung vereinfacht.

### Bezugszeichenliste:

- 10: Leitschaufelcluster
- 12: Gehäuse
- 14: Schaufelblatt
- 16: Plattform
- 18: Schaufelspitze
- 20: Flansch
- 22: Flansch
- 24: Abschnitt
- 26: Nut
- 28: Dämpfungselement
- 30: Auskragung
- 32: Auskragung
- 34: Nut
- 36: Auskragung
- 38: Aussparung
- S: Strömungskanal
- E: Endbereich
- U: Umfangsrichtung
- IIIa-c: Anlagepunkte

## Patentansprüche

1. Leitschaufel für eine Gasturbine, umfassend ein Schaufelblatt (14), eine an einem radialen Ende des Schaufelblatts (14) angeordnete Plattform (16), einen sich radial von der Plattform (16) erstreckenden stromaufwärtigen Flansch (20) und einen sich radial von der Plattform (16) erstreckenden stromabwärtigen Flansch (22), wobei die Flansche (20, 22) zusammen mit einem zwischen den Flanschen (20, 22) liegenden Abschnitt (24) der Plattform (16) eine sich in Umfangsrichtung (U) der Gasturbine erstreckende Nut (26) zur Anordnung eines Dämpfungselements (28) begrenzen, **dadurch gekennzeichnet, dass** eine die Nut (26) begrenzende Oberfläche des Abschnitts (24) der Plattform (16) zumindest bereichsweise radial in Richtung einer Öffnung der Nut (26) gewölbt ist.

2. Leitschaufel nach Anspruch 1, **dadurch gekennzeichnet, dass** eine von der Nut (26) abgewandte Oberfläche des Abschnitts (24) der Plattform (16) zumindest bereichsweise radial in Richtung der Öffnung der Nut (26) gewölbt ist und/oder dass der Abschnitt (24) der Plattform (16) im Querschnitt eine zumindest im Wesentlichen einheitliche Wandstärke besitzt.

3. Leitschaufel nach Anspruch 1 oder 2, **dadurch gekennzeichnet, dass** das Schaufelblatt (14) gegenüber der Plattform (16) eine freiliegende Schaufelspitze (18) aufweist.

4. Leitschaufel nach einem der Ansprüche 1 bis 3, **dadurch gekennzeichnet, dass** der stromaufwärtige Flansch (20) eine stromabwärtige Auskragung (30, 32, 36) in die Nut (26) aufweist und/oder dass der stromabwärtige Flansch (22) eine stromaufwärtige Auskragung (30) in die Nut (26) umfasst und/oder dass der stromaufwärtige Flansch (20) eine stromaufwärtige Auskragung (36) aufweist, welche zusammen mit der Plattform (16) eine weitere sich in Umfangsrichtung (U) der Gasturbine erstreckende Nut (26, 34) bildet und/oder dass der stromabwärtige Flansch (22) eine stromabwärtige Auskragung (32) aufweist, welche zusammen mit der Plattform (16) eine weitere, sich in Umfangsrichtung (U) der Gasturbine erstreckende Nut (34) bildet.

5. Leitschaufelcluster (10) für eine Gasturbine, bei welchem mindestens zwei Leitschaufeln nach einem der Ansprüche 1 bis 4 über wenigstens eine gemeinsame Plattform (16) zur radialen Begrenzung eines Strömungskanals (S) der Gasturbine miteinander verbunden sind.

6. Gehäuse (12) für eine Gasturbine, mit einem Strömungskanal, in welchem mehrere Leitschaufeln gemäß einem der Ansprüche 1 bis 4 und/oder mehrere Leitschaufelcluster (10) gemäß Anspruch 5 kranzförmig angeordnet sind, wobei die sich in Umfangsrichtung (U) der Gasturbine erstreckenden Nuten (26, 34) der Leitschaufeln und/oder Leitschaufelcluster (10) miteinander fluchten und wobei wenigstens ein Dämpfungselement (28) in wenigstens einer der Nuten (26) angeordnet ist.

7. Gehäuse (12) nach Anspruch 6, **dadurch gekennzeichnet, dass** das wenigstens ein Dämpfungselement (28) eine Aussparung (38) im Bereich des radial in Richtung einer Öffnung der Nut (26) gewölbt Abschnitts (24) der zugeordneten Plattform (16) aufweist und/oder dass das Dämpfungselement (28) im Querschnitt u-förmig oder o-förmig oder klammerförmig ausgebildet ist und/oder dass das Dämpfungselement (28) in Umfangsrichtung (U) linear ausgebildet ist.

8. Gehäuse (12) nach Anspruch 6 oder 7, **dadurch gekennzeichnet, dass** das Dämpfungselement (28) im Querschnitt mindestens drei Anlagepunkte (IIIa-c) in der Nut (26) aufweist und/oder dass das Dämpfungselement (28) wenigstens einen und vorzugsweise mindestens zwei Anlagepunkte (IIIc) mit dem Gehäuse (12) aufweist.

9. Gehäuse (12) nach einem der Ansprüche 6 bis 8, **dadurch gekennzeichnet, dass** das Dämpfungselement (28) überbrückend zwischen mindestens zwei aneinander angrenzenden Leitschaufeln und/oder Leitschaufelclustern (10) angeordnet ist.

10. Gasturbine, insbesondere Flugtriebwerk, mit wenigstens einer Leitschaufel nach einem der Ansprüche 1 bis 4 und/oder wenigstens einem Leitschaufelcluster (10) gemäß Anspruch 5 und/oder wenigstens einem Gehäuse (12) nach einem der Ansprüche 6 bis 9.
